# EUROPÄISCHE PATENTSCHRIFT

(11) **EP 1 750 109 B1**
(45) Veröffentlichungstag und Bekanntmachung des Hinweises auf die Patenterteilung: **14.03.2012**
(21) Anmeldenummer: 06009500.7
(22) Anmeldetag: 09.05.2006
(51) Int. Cl.: G01L 5/22

(54) **Drehmomentsensor und Verfahren zu dessen Herstellung**
Torque sensor and method for its production
Détecteur de couple et son procédé de fabrication

(30) Priorität: 29.07.2005 DE 102005038514
(43) Veröffentlichungstag der Anmeldung: 07.02.2007
(73) Patentinhaber: Valeo Schalter und Sensoren GmbH, 74321 Bietigheim-Bissingen (DE)
(72) Erfinder: Rachui, Dirk, 74321 Bietigheim-Bissingen (DE); Schoepe, Roman, 74321 Bietigheim-Bissingen (DE); Fein, Berthold, 74321 Bietigheim-Bissingen (DE); Thom, Jens, 71034 Böblingen (DE)
(74) Vertreter: Pothmann, Karsten

(56) Entgegenhaltungen:
- DE-U1- 29 615 165
- US-A- 5 123 279
- US-A1- 2001 029 791
- US-A1- 2001 029 791
- US-A1- 2002 060 105
- US-A1- 2003 042 066
- US-A1- 2003 167 857
- US-B1- 6 260 422
- PATENT ABSTRACTS OF JAPAN Bd. 1996, Nr. 05, 31. Mai 1996 (1996-05-31) -& JP 08 005477 A (UNISIA JECS CORP), 12. Januar 1996 (1996-01-12)
- PATENT ABSTRACTS OF JAPAN Bd. 016, Nr. 527 (P-1447), 29. Oktober 1992 (1992-10-29) -& JP 04 198824 A (NISSAN MOTOR CO LTD), 20. Juli 1992 (1992-07-20)
- PATENT ABSTRACTS OF JAPAN Bd. 1999, Nr. 14, 22. Dezember 1999 (1999-12-22) & JP 11 248564 A (NIPPON SEIKO KK), 17. September 1999 (1999-09-17)

## Beschreibung

Die Erfindung betrifft einen Drehmomentsensor mit den Merkmalen des Oberbegriffs des Anspruchs 1 sowie ein Verfahren zur Herstellung eines derartigen Drehmomentsensors mit den Merkmalen des Oberbegriffs des Anspruchs 9.

Drehmomentsensoren sind zum Beispiel aus der DE 101 27 816 A1, der EP 1 087 884 B1, der WO 02/071 019 und der DE 102 56 322 A1 bekannt. Sie dienen zur Erfassung eines auf eine Welle ausgeübten Drehmoments, wobei die ermittelten Daten insbesondere dazu verwendet werden, um, beim Einsatz des Drehmomentssensors in Lenksystemen von Kraftfahrzeugen, die elektrische Lenkkraftunterstützung anzusteuern. Bei diesen Drehmomentsensoren werden die ermittelten Daten über ein Kabel aus dem Gehäuse des Drehmomentsensors herausgeführt, wofür das Gehäuse eine Kabeldurchführungstülle aufweist, über welche die Gehäuseöffnung fluiddicht nach außen abgedichtet wird. Es ist auch bekannt, in der Gehäusewandung eine nach außen führende Buchse fluiddicht einzusetzen, so dass von außen ein Stecker eines KfZ-Bordnetzes an die Buchse des Drehmomentsensor angeschlossen werden kann. Innerhalb des Gehäuses ist an die Buchse ein Kabel angeschlossen, an welchem sich ein Gegenstecker befindet, in den ein Stecker eingesteckt wird, der mit der Sensoreinheit verbunden ist. Eine derartige Anordnung ist nicht nur aufwändig und teuer sondern sie ist auch montageunfreundlich, da sie nicht automatisiert werden kann. Aufgrund der Handmontage besteht auch die Gefahr, dass Montagefehler auftreten.

Aus der US-A-6 260 422 ist ein Drehmomentsensor bekannt, bei dem die statischen Sensoreinheiten im Mantel eines rohrförmigen Gehäuses angeordnet sind. Bei der Montage, bei der die dynamische Sensoreinheit axial in die statische Sensoreinheit eingeschoben wird, muss anschließend in einem zweiten Arbeitsschritt der Stecker axial aufgesteckt werden, wobei darauf geachtet werden muss, dass sich das Innengehäuse nicht zum Außengehäuse verdreht, da ansonsten die die statischen Sensoreinheiten aufnehmenden Öffnungen nicht mehr zueinander fluchten. Eine ähnliche Anordnung findet sich auch in der US-A-5 123 279 wieder, in der der Stecker axial, d.h. rechtwinklig zur Fügerichtung von dynamischer und statischer Sensoreinheit montiert wird. Aus der US 2002/0060105 A1 ist ein Drehmomentsensor mit den Merkmalen des Oberbegriffs bekannt.

Der Erfindung liegt daher die Aufgabe zugrunde, einen Drehmomentsensor und/oder ein Verfahren zu dessen Herstellung bereitzustellen, mit welchem zum einen der Drehmomentsensor preiswerter hergestellt werden kann und mit dem Montagefehler unterbunden werden können.

Diese Aufgabe wird mit einem Drehmomentsensor mit den Merkmalen des Anspruchs 1 gelöst.

Der erfindungsgemäße Drehmomentsensor kann aufgrund seiner bevorzugten Ausgestaltung automatisch montiert werden, da der Gegenstecker ortsfest am ersten Gehäuseteil und nicht, wie beim Stand der Technik, über ein Kabel mit dem ersten Gehäuseteil verbunden ist, so dass dieser stets eine definierte Position einnimmt. In dieses erste Gehäuseteil wird auch die statische Sensoreinheit eingesetzt und montiert, die den zugehörigen Stecker trägt, der mit dem Gegenstecker verbunden werden soll. Bei der Montage der statischen Sensoreinheit erfolgt gleichzeitig oder unmittelbar anschließend die Kontaktierung von Stecker und Gegenstecker, was ebenfalls automatisiert werden kann, da aufgrund der ortsfesten Anordnung des Steckers an der statischen Sensoreinheit dieser eine definierte Position aufweist, so dass er mit dem Gegenstecker, der ebenfalls eine definierte Position besitzt, gefügt werden kann. Ein Freiheitsgrad kann in Richtung der Steckerpins bzw. der Steckerstifte existieren, so dass der Stecker nach der Montage der statischen Sensoreinheit im ersten Gehäuseteil zwar mit dem Gegenstecker fluchtet, mit diesem jedoch noch nicht kontaktiert ist, so dass er in einem zweiten Arbeitsschritt durch axiale Verschiebung mit dem Gegenstecker verbunden wird. Auf jeden Fall besitzen sowohl der Gegenstecker als auch der Stecker definierte Positionen innerhalb des ersten Gehäuseteils, so dass sie automatisch gefügt werden können. Dabei entspricht die Richtung der Steckerstifte der Fügerichtung der statischen Sensoreinheit und/oder der dynamischen Sensoreinheit ins erste Gehäuseteil. Diese Ausgestaltung ermöglicht das Fügen von Sensoreinheit und Gehäuseteil in einem Schritt zusammen mit dem Fügen von Stecker und Gegenstecker. Dabei können Stecker und Gegenstecker zusätzlich noch Fügehilfen bzw. Einführhilfen aufweisen, um einen geringen Versatz zu eliminierten.

Erfindungsgemäß ist der Stecker in einer parallel zu den Steckerstiften verlaufenden Schiebeführung an der statischen Sensoreinheit gehalten. Diese Schiebeführung erlaubt eine Montage der statischen Sensoreinheit im ersten Gehäuseteil, ohne dass der Stecker sofort mit dem Gegenstecker gefügt wird. Diese Fügung erfolgt anschließend in einem zweiten Arbeitsschritt, in welchem der Stecker mit einem geeigneten Werkzeug längs der Schiebeführung, dass heißt in Richtung der Steckerstifte, auf den bzw. in den Gegenstecker verschoben wird. Die Fügekraft kann so gewählt werden, dass Gegenkräfte von Rastmitteln, Dichtungen und dergleichen überwunden werden. Da dieser Fügeschritt unabhängig vom Montageschritt der statischen Sensoreinheit in das erste Gehäuseteil ist, können die jeweiligen Fügekräfte gezielt bestimmt werden, ohne dass die jeweils anderen Bauteile nachteilig beeinflusst werden.

Bei einer Weiterbildung ist vorgesehen, dass der Gegenstecker ein separates Bauteil darstellt und am ersten Gehäuseteil montiert ist. Dies erfolgt zum Beispiel über eine Steckertülle oder andere Abdichtung, welche in eine Gehäuseöffnung eingesetzt ist. Auf der nach außen gerichteten Seite besitzt der Gegenstecker einen Anschluss, insbesondere eine Buchse zur Aufnahme eines Steckers einer Bordverkabelung eines Fahrzeugs. Dabei ist der Gegenstecker fluiddicht in der Aufnahmeöffnung des ersten Gehäuseteils angeordnet, so dass sich weitere Vorkehrungen für die Abdichtung erübrigen.

In bevorzugter Weise ist der Gegenstecker von außen in die Aufnahmeöffnung des ersten Gehäuseteils eingesteckt und dort verastet. Diese Maßnahme ermöglicht eine relativ einfache Montage des Gegensteckers am Gehäuse, die ebenfalls automatisierbar ist.

Bei einer anderen Ausführungsform sind der Gegenstecker und das erste Gehäuseteil einteilig ausgebildet. Diese Ausgestaltung hat den wesentlichen Vorteil, dass kein zusätzlicher Gegenstecker im ersten Gehäuseteil montiert werden muss, da dieses bereits mit dem Gegenstecker versehen ist und es müssen auch keine Vorkehrungen zur Abdichtung getroffen werden. Die Steckerstifte werden entweder eingesetzt oder sind bereits in das erste Gehäuseteil eingespritzt.

Erfindungsgemäß weisen der Gegenstecker und der Stecker Rastmittel zum gegenseitigen verasten auf. Hierdurch wird sichergestellt, dass sich der Stecker nicht ungewollt vom Gegenstecker löst, dass heißt das eine sichere Kontaktierung gewährleistet ist.

Der gleiche Effekt wird erzielt, wenn die Fügerichtung des Steckers und des Gegensteckers der Fügerichtung der statischen Sensoreinheit und/oder der dynamischen Sensoreinheit mit dem ersten Gehäuseteil entspricht. Da die Fügerichtungen gleich sind, kann in einem einzigen Arbeitsschritt oder in zwei aufeinander folgenden Arbeitsschritten, wobei die Bewegungsrichtung der Arbeitsschritte gleich sind, die komplette Montage erfolgen.

Dabei kann bei einem ersten Ausführungsbeispiel das erste Gehäuseteil ein Gehäusetopf und bei einem zweiten Ausführungsbeispiel das erste Gehäuseteil ein Deckel sein. Auf jeden Fall sind an ein und dem selben Gehäuseteil das statische Sensorelemente mit Stecker und der Gegenstecker montiert. Dieses Gehäuseteil kann dann mit dem zweiten Gehäuseteil, welches entweder ein Deckel oder ein Gehäusetopf ist, verschlossen werden, so dass der gesamte Drehmomentsensor als fertig montiertes Bauteil das Montageband verlassen kann.

Die eingangsgenannte Aufgabe wird erfindungsgemäß auch durch ein Verfahren mit den Merkmalen des Anspruchs 9 gelöst.

Wichtig ist, dass der Gegenstecker ortsfest am ersten Gehäuseteil und der Stecker ortsfest an der statischen Sensoreinheit montiert sind, so dass bei einem Fügen von statischer Sensoreinheit und erstem Gehäuseteil nicht nur diese beiden Bauteile sondern auch der Stecker und der Gegenstecker gefügt werden, da die Bauteile zueinander ausgerichtet sind, so dass dieser Montagevorgang automatisch erfolgen kann.

Dabei kann, wie bereits erwähnt, zum Fügen des Steckers ein den Stecker in oder an den Gegenstecker drückendes Werkzeug verwendet werden, so dass der Montagevorgang zwar der gleiche ist, jedoch Montagekräfte zum Montieren der statischen Sensoreinheit und zum Montieren des Steckers voneinander getrennt sind bzw. sich einander nicht beeinflussen.

Weitere Vorteile, Merkmale und Einzelheiten der Erfindung ergeben sich aus den Unteransprüchen sowie der nachfolgenden Beschreibung, in der unter Bezugnahme auf die Zeichnung zwei besonders bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine Draufsicht auf den erfindungsgemäßen Drehmomentsensor mit geöffnetem Gehäuse;
- Figur 2: einen Querschnitt II-II durch den Drehmomentsensor der Figur 1 gemäß einem ersten Ausführungsbeispiel und;
- Figur 3: einen Querschnitt III-III durch den Drehmomentsensor der Figur 1 gemäß einem zweiten Ausführungsbeispiel.

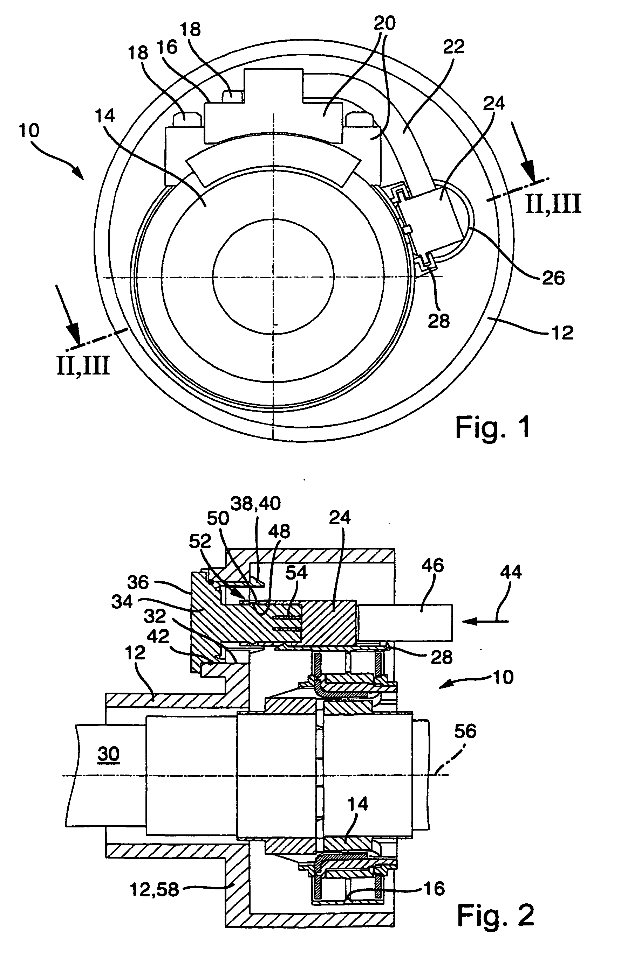

Die Figur 1 zeigt eine Draufsicht auf einen insgesamt mit 10 bezeichneten Drehmomentsensor, in dessen Gehäuse 12 sowohl eine dynamische Sensoreinheit 14 als auch eine statische Sensoreinheit 16 angeordnet sind. Die Funktion des Drehmomentsensors 10 und der Aufbau der Sensoreinheiten 14 und 16 wird hier nicht näher beschrieben und es wird auf die DE 102 56 322 A1 verwiesen. Die statische Sensoreinheit 16 ist zum Beispiel mittels Schrauben 18 und über Sockel 20 am Gehäuse 12 ortsfest montiert. Über ein Kabel 22 werden die Daten der Sensoreinheit 14 und 16 an einen Stecker 24 übertragen, welcher in einer Steckeraufnahme 26 an der statischen Sensoreinheit 16 angeordnet ist. Dabei weist die Steckeraufnahme 26 eine Schiebeführung 28 auf, die später im Detail erläutert wird. Der Stecker 24 und die statische Sensoreinheit 16 besitzen eine definierte Lage zueinander.

Die Figur 2 zeigt ein erstes Ausführungsbeispiel des erfindungsgemäßen Drehmomentsensors 10, wobei das Gehäuse 12 zum Beispiel eine Lenkwelle 30 umschließt und an der Lenkwelle 30 die dynamische Sensoreinheit 14 und am Gehäuse 12 die statische Sensoreinheit 16 befestigt sind. Außerdem ist erkennbar, dass das Gehäuse 12, insbesondere ein erstes Gehäuseteil 58, welches topfförmig ausgebildet ist, eine Aufnahmeöffnung 32 aufweist, in welchem ein Gegenstecker 34 angeordnet ist. Dieser Gegenstecker 34 ist zur Außenseite hin als Buchse 36 ausgebildet, so dass dort der Stecker eines Bordnetzes oder Kabelstranges eingesteckt werden kann. Zur Innenseite hin weist der Gegenstecker 34 Rasthaken 38 auf, die Teil eines Rastmittels 40 sind, mit denen der Gegenstecker 34 mit dem ersten Gehäuseteil 58 verrastet ist. Außerdem ist erkennbar, dass zwischen dem Gegenstecker 34 und dem Gehäuse 12 eine Dichtung 42 vorgesehen ist, die ein Eindringen von Fluiden und Schmutz in das Gehäuse 12 verhindert. Dieses erste Gehäuseteil 58 wird von einem (nicht dargestellten) Deckel verschlossen.

Zum Verschieben des Steckers 24 innerhalb der Schiebeführung 28 dient ein Werkzeug 46 welches in Richtung des Pfeils 44 betätigt wird, bis Rastnasen 48 des Gegensteckers 34 in Rastöffnungen 50 des Steckers 24 einrasten. Die Rastnasen 48 und Rastöffnungen 50 bilden Rastmittel 52. Es ist erkennbar, dass die Verschieberichtung des Steckers 24 (Pfeil 44) der Längsrichtung der Steckerstifte 54 und der Achse 56 der Lenkwelle 30 entspricht. Auch die Fügerichtung der dynamischen Sensoreinheit 14 sowie der statischen Sensoreinheit 16 entspricht der Richtung des Pfeils 44.

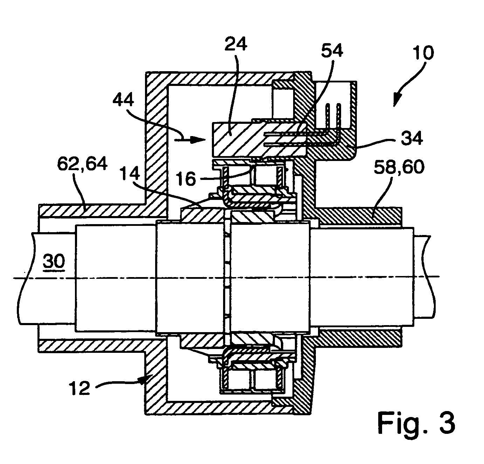

Die Figur 3 zeigt ein zweites Ausführungsbeispiel des erfindungsgemäßen Drehmomentsensors 10, bei welchem die statische Sensoreinheit 16 an einem ersten Gehäuseteil 58, welcher einen Deckel 60 für das zweite Gehäuseteil 62 darstellt, befestigt ist. Dieses zweite Gehäuseteil 62 bildet einen Gehäusetopf 64.

Am ersten Gehäuseteil 58 ist einstückig der Gegenstecker 34 angeformt und besitzt demnach eine definierte Position. Die Steckerstifte 54 sind in Richtung des Pfeils 44, welcher die Fügerichtung für den Stecker 24 sowie die statische Sensoreinheit 16 anzeigt, ausgerichtet. Werden also die Sensoreinheiten 14 und 16 zusammen mit dem Stecker 24 in das erste Gehäuseteil 58 eingeführt, dann kontaktiert der Stecker 24 ohne weiteren Montageschritt automatisch den Gegenstecker 34. Anschließend wird das zweite Gehäuseteil 62 aufgesetzt, so dass das Gehäuse 12 verschlossen ist.

## Patentansprüche

1. Drehmomentsensor (10) mit einer statischen Sensoreinheit (16), einer dynamischen Sensoreinheit (14), einem ersten Gehäuseteil (58) und einem das erste Gehäuseteil (58) verschließenden zweiten Gehäuseteil (62), wobei das erste Gehäuseteil (58) einen Gegenstecker (34) aufweist und zur Aufnahme der statischen Sensoreinheit (16) dient, wobei an der statischen Sensoreinheit (16) ein Stecker (24) mit Steckerstiften (54) für den Gegenstecker (34) ortsfest und ggf. axial verschieblich angeordnet ist, wobei die Richtung der Steckerstifte (54) der Fügerichtung (Pfeil 44) der statischen Sensoreinheit (16) und/oder der dynamischen Sensoreinheit (14) ins erste Gehäuseteil (58) entspricht, **dadurch gekennzeichnet, dass** der Stecker (24) in einer parallel zu den Steckerstiften (54) verlaufenden Schiebeführung (28) an der statischen Sensoreinheit (16) gehalten ist.

2. Drehmomentsensor nach Anspruch 1, **dadurch gekennzeichnet, dass** der Gegenstecker (34) ein separates Bauteil darstellt und am ersten Gehäuseteil (58) anmontiert ist.

3. Drehmomentsensor nach Anspruch 2, **dadurch gekennzeichnet, dass** der Gegenstecker (34) von außen in eine Aufnahmeöffnung (32) des ersten Gehäuseteils (58) eingesteckt und dort verastet ist.

4. Drehmomentsensor nach Anspruch 2 oder 3, **dadurch gekennzeichnet, dass** der Gegenstecker (34) fluiddicht in einer Aufnahmeöffnung (32) des ersten Gehäuseteils (58) angeordnet ist.

5. Drehmomentsensor nach Anspruch 1, **dadurch gekennzeichnet, dass** der Gegenstecker (34) und das erste Gehäuseteil (58) einteilig ausgebildet sind.

6. Drehmomentsensor nach einem der vorhergehenden Ansprüche, **dadurch gekennzeichnet, dass** der Gegenstecker (34) und der Stecker (24) Rastmittel (52) zum gegenseitigen Verasten aufweisen.

7. Drehmomentsensor nach einem der vorhergehenden Ansprüche, **dadurch gekennzeichnet, dass** die Fügerichtung (Pfeil 44) des Steckers (24) und Gegensteckers (34) und die Fügerichtung der statischen Sensoreinheit (16) und/oder der dynamischen Sensoreinheit (14) gleich sind.

8. Drehmomentsensor nach einem der vorhergehenden Ansprüche, **dadurch gekennzeichnet, dass** das erste Gehäuseteil (58) ein Gehäusetopf oder ein Deckel (60) ist.

9. Verfahren zur Herstellung eines Drehmomentsensors (10), insbesondere nach einem der vorhergehenden Ansprüche, **dadurch gekennzeichnet, dass** der Gegenstecker (34) direkt mit dem ersten Gehäuseteil (58) verbunden wird oder ist, und dass der an der statischen Sensoreinheit (16) vorgesehene Stecker (24) mit Steckerstiften (54) bei der Montage der Sensoreinheit (14, 16) am ersten Gehäuseteil (58) zeitgleich oder zeitversetzt mit dem Gegenstecker (54) kontaktiert wird, wobei die statische Sensoreinheit (16) und die dynamische Sensoreinheit (14) in Richtung der Steckerstifte (54) in das erste Gehäuseteil (58) gefügt werden, **dadurch gekennzeichnet, dass** der Stecker (24) in einer parallel zu den Steckerstiften (54) verlaufenden Schiebeführung (28) an der statischen Sensoreinheit (16) gehalten wird.

10. Verfahren nach Anspruch 9, **dadurch gekennzeichnet, dass** zum Fügen des Steckers (24) ein den Stecker (24) in oder an den Gegenstecker (34) drückendes Werkzeug (46) verwendet wird.

## Claims

1. Torque sensor (10) having a static sensor unit (16), a dynamic sensor unit (14), a first housing part (58) and a second housing part (62) which closes the first housing part (58), with the first housing part (58) having a mating plug (34) and serving to accommodate the static sensor unit (16), with a plug (24) having plug pins (54) for the mating plug (34) being arranged in a stationary and possibly axially displaceable manner on the static sensor unit (16), with the direction of the plug pins (54) corresponding to the joining direction (arrow 44) of the static sensor unit (16) and/or the dynamic sensor unit (14) into the first housing part (58), **characterized in that** the plug (24) is held in a sliding guide (28), which runs parallel to the plug pins (54), on the static sensor unit (16).

2. Torque sensor according to Claim 1, **characterized in that** the mating plug (34) constitutes a separate component and is mounted on the first housing part (58).

3. Torque sensor according to Claim 2, **characterized in that** the mating plug (34) is inserted into a receiving opening (32) in the first housing part (58) from the outside, and is locked there.

4. Torque sensor according to Claim 2 or 3, **characterized in that** the mating plug (34) is arranged in a receiving opening (32) in the first housing part (58) in a liquid-tight manner.

5. Torque sensor according to Claim 1, **characterized in that** the mating plug (34) and the first housing part (58) are integrally formed.

6. Torque sensor according to one of the preceding claims, **characterized in that** the mating plug (34) and the plug (24) have latching means (52) for mutual locking.

7. Torque sensor according to one of the preceding claims, **characterized in that** the joining direction (arrow 44) of the plug (24) and mating plug (34) and the joining direction of the static sensor unit (16) and/or the dynamic sensor unit (14) are identical.

8. Torque sensor according to one of the preceding claims, **characterized in that** the first housing part (58) is a housing pot or a cover (60).

9. Method for producing a torque sensor (10), in particular according to one of the preceding claims, **characterized in that** the mating plug (34) will be or is connected directly to the first housing part (58), and **in that** the mating plug (34) makes contact with the plug (24), which is provided on the static sensor unit (16) and has plug pins (54), at the same time as or with a time delay with respect to mounting of the sensor unit (14, 16) on the first housing part (58), with the static sensor unit (16) and the dynamic sensor unit (14) being joined into the first housing part (58) in the direction of the plug pins (54), **characterized in that** the plug (24) is held in a sliding guide (28), which runs parallel to the plug pins (54), on the static sensor unit (16).

10. Method according to Claim 9, **characterized in that** a tool (46) which presses the plug (24) into or onto the mating plug (34) is used for joining the plug (24).

## Revendications

1. Détecteur de couple (10) comprenant une unité de capteur statique (16), une unité de capteur dynamique (14), une première partie de boîtier (58) et une deuxième partie de boîtier (62) fermant la première partie de boîtier (58), la première partie de boîtier (58) présentant une fiche complémentaire (34) et servant à recevoir l'unité de capteur statique (16), une fiche (24) avec des broches de fiche (54) pour la fiche complémentaire (34) étant disposée de manière fixe et éventuellement déplaçable axialement sur l'unité de capteur statique (16), la direction des broches de fiche (54) correspondant à la direction d'assemblage (flèche 44) de l'unité de capteur statique (16) et/ou de l'unité de capteur dynamique (14) dans la première partie de boîtier (58), **caractérisé en ce que** la fiche (24) est maintenue dans un guide coulissant (28) s'étendant parallèlement aux broches de fiche (54) sur l'unité de capteur statique (16).

2. Capteur de couple selon la revendication 1, **caractérisé en ce que** la fiche complémentaire (34) constitue un composant séparé et est montée sur la première partie de boîtier (58).

3. Capteur de couple selon la revendication 2, **caractérisé en ce que** la fiche complémentaire (34) est enfoncée depuis l'extérieur dans une ouverture de réception (32) de la première partie de boîtier (58) et y est encliquetée.

4. Capteur de couple selon la revendication 2 ou 3, **caractérisé en ce que** la fiche complémentaire (34) est disposée de manière étanche aux fluides dans une ouverture de réception (32) de la première partie de boîtier (58).

5. Capteur de couple selon la revendication 1, **caractérisé en ce que** la fiche complémentaire (34) et la première partie de boîtier (58) sont réalisées d'une seule pièce.

6. Capteur de couple selon l'une quelconque des revendications précédentes, **caractérisé en ce que** la fiche complémentaire (34) et la fiche (24) présentent des moyens d'encliquetage (52) pour un encliquetage mutuel.

7. Capteur de couple selon l'une quelconque des revendications précédentes, **caractérisé en ce que** la direction d'assemblage (flèche 44) de la fiche (24) et de la fiche complémentaire (34) et la direction d'assemblage de l'unité de capteur statique (16) et/ou de l'unité de capteur dynamique (14) sont les mêmes.

8. Capteur de couple selon l'une quelconque des revendications précédentes, **caractérisé en ce que** la première partie de boîtier (58) est un dessus de boîtier ou un couvercle (60).

9. Procédé de fabrication d'un capteur de couple (10), en particulier selon l'une quelconque des revendications précédentes, **caractérisé en ce que** la fiche complémentaire (34) va être ou est connectée directement à la première partie de boîtier (58), et **en ce que** la fiche (24) prévue sur l'unité de capteur statique (16), comprenant des broches de fiche (54), est mise en contact lors du montage de l'unité de capteur (14, 16) sur la première partie de boîtier (58) en même temps ou avec un retard avec la fiche complémentaire (34), l'unité de capteur statique (16) et l'unité de capteur dynamique (14) étant assemblées dans la direction des broches de fiche (54) dans la première partie de boîtier (58), **caractérisé en ce que** la fiche (24) est maintenue sur l'unité de capteur statique (16) dans un guide coulissant (28) s'étendant parallèlement aux broches de fiche (54).

10. Procédé selon la revendication 9, **caractérisé en ce que** pour l'assemblage de la fiche (24), on utilise un outil (46) pressant la fiche (24) dans ou sur la fiche complémentaire (34).
